# EUROPÄISCHE PATENTANMELDUNG

(11) **EP 0 578 076 A1**
(43) Veröffentlichungstag der Anmeldung: **12.01.1994**
(21) Anmeldenummer: 93110169.5
(22) Anmeldetag: 25.06.1993
(51) Int. Cl.: H04Q 7/04, H04B 7/26

(54) **Zellulares Mobilfunksystem und Funkfeststation dafür**

(30) Priorität: 07.07.1992 DE 4222237
(71) Anmelder: Alcatel SEL Aktiengesellschaft, D-70435 Stuttgart (DE)
(72) Erfinder: Hupperich, Peter, D-6682 Ottweiler (DE); Weis, Bernd X., D-7015 Korntal (DE)
(74) Vertreter: Brose, Gerhard

(57) **Zusammenfassung**

Bewegt sich eine Mobilstation (z.B. auf einer Bahnstrecke) schnell und ortsnah an einer Funkfeststation vorbei, so tritt in beiden Übertragungsrichtungen einer zweiseitig gerichteten Funkverbindung ein signifikanter Dopplersprung auf.

Bekannte zellulare Mobilfunksysteme bestehen aus sich überlappenden Funkzellen. Mobilstationen halten innerhalb jeder Funkzelle mit einer Funkfeststation eine Funkverbindung, die bei einem Funkzellen-Wechsel an die (neue) entsprechende Funkfeststation weitergereicht wird (Handover). Auftretende Dopplersprünge werden nicht eliminiert.

Aufgabe der Erfindung ist es, ein zellulares Mobilfunksystem (MRS) und Systemkomponenten dafür bereitzustellen, die auch dann noch eine Mobilfunkversorgung gewährleisten, wenn Mobilstationen (MS) schnell an Funkfeststationen (BTSx) vorbeifahren.

Dies wird durch Funkzellen (RCx) erreicht, die sich einseitig von der jeweiligen Funkfeststation (BTSx) aus in eine gleichsinnige Richtung (Bewegungsrichtung der Mobilstation) erstrecken und eine Kette von sich überlappenden Funkzellen entlang der Bahnstrecke (TR) bilden.

## Beschreibung

Die Erfindung betrifft ein zellulares Mobilfunksystem und eine Funkfeststation dafür.

Zellulare Mobilfunksysteme herkömmlicher Art sind Funkfernsprechsysteme für eine frequenzökonomische, flächendeckende Versorgung eines Gebietes. Das Versorgungsgebiet ist in einzelne Funkzellen aufgeteilt, die in ihrem Zentrum eine sie versorgende Funkfeststation aufweisen. Die Funkfeststationen benachbarter Funkzellen arbeiten auf unterschiedlichen Funkfrequenzen, wodurch das dem Mobilfunksystem zugewiesene Frequenzband mehrmals im Versorgungsgebiet genutzt werden kann (räumliche Frequenzwiederbenutzung).

Nach obiger Struktur sind bekannte zellulare Mobilfunksysteme aufgebaut, wie z.B. das in "Siemens Telcom Report", 1985, Heft 2, S. 74 - 90 beschriebene Funkfernsprechnetz C und die in "Funkschau-Spezial", 1992, Heft 6, S. 6 - 46 beschriebenen GSM-Netze (GSM: Global System for Mobile Communications).

Bei einer linienförmigen Funkversorgung von Verkehrswegen, wie z.B. im Bahn-Streckenfunk, sind die Funkfeststationen entlang des Verkehrsweges angeordnet. Bekannte Streckenfunksysteme werden in "Ascom Technische Mitteilungen", 1991, Heft 3/4, S. 33 - 37 beschrieben.

Eine Funkverbindung zwischen einer Mobilstation (z.B. im Führerstand eines Zuges) und einer sich am Verkehrsweg befindenden Funkfeststation bleibt während des Aufenthaltes der Mobilstation in der entsprechenden Funkzelle erhalten. Bewegt sich die Mobilstation ortsnah am Standort der Funkfeststation vorbei, während beide miteinander in einer zweiseitig gerichteten Funkverbindung stehen, so tritt in beiden Übertragungsrichtungen ein Dopplersprung auf. Dieser ist in seinem Betrag umso größer, Je höher die Geschwindigkeit der sich vorbeibewegenden Mobilstation ist. Der Dopplersprung führt insbesondere zu Synchronsisationsproblemen zwischen Sende- und Empfangseinheiten in der Mobilstation und der Funkfeststation, so daß ein ungewollter Abbruch der Funkverbindung eintreten kann. Die oben zuletzt zitierte Druckschrift weist diesbezüglich auf die nicht unproblematische "Anwendung von GSM auf das Bahnfunknetz" hin und bemerkt, daß "GSM nicht für Geschwindigkeiten von 250 km/h und mehr ausgelegt" ist. Es werden Jedoch keine konkreten Problemstellungen und -lösungen aufgezeigt.

Der Erfindung liegt die Aufgabe zugrunde, ein zellulares Mobilfunksystem und Systemkomponenten dafür bereitzustellen, die auch dann noch eine Mobilfunkversorgung gewährleisten, wenn Mobilstationen schnell an Funkfeststationen vorbeifahren.

Die Aufgabe wird erfindungsgemäß gelöst durch ein Mobilfunksystem nach der Lehre des Anspruchs 1 und eine Funkfeststation nach der Lehre des Anspruchs 4.

Gemäß Anspruch 1 wird ein zellulares Mobilfunksystem bereitgestellt, welches mindestens eine Kette von gleichsinnig richtungsorientierten Funkzellen aufweist zur lückenlosen Ausleuchtung des Raubbereichs eines Verkehrsweges und welches ein Weiterreichen einer Funkverbindung von Funkzelle zu Funkzelle gewährleistet so, daß eine Mobilstation während des Vorbeifahrens an einer Funkfeststation nicht mit letzterer in Funkverbindung steht und somit ein Dopplersprung vermieden wird.

Im Unterschied zu den Funkzellen in den bekannten Mobilfunksystemen erstrecken sich die Funkzellen des erfindungsgemäßen Mobilfunksystems jeweils von der sie versorgenden Antenne so weit, daß mindestens eine der beiden Antennen räumlich umfaßt ist, welche die benachbarten Funkzellen versorgen. Bei einem erfindungsgemäßen Weiterreichen einer Funkverbindung befinden sich beide an dem Weiterreichen beteiligten Funkfeststationen, von der entsprechenden Mobilstation aus betrachtet, in der gleichen Richtung. Somit tritt kein Dopplersprung während des Weiterreichens einer Funkverbindung auf. Die Funkverbindung bleibt stets und ausschließlich zwischen der Mobilstation und derjenigen Funkfeststation bestehen, in deren Funkzelle die Mobilstation zuletzt hineingefahren ist.

Die Mobilstation ist, während sie an einer Funkfeststation vorbeifährt, nicht mit dieser, sondern bereits mit der nachfolgenden Funkfeststation in Funkverbindung. Ein Dopplersprung aufgrund eines Vorbeifahrens der Mobilstation an einer mit ihr in Funkverbindung stehenden Funkfeststation ist damit unterbunden.

Die Lehre des Anspruchs 1 läßt grundsätzlich den Einsatz von Antennen mit verschiedenen Richtcharakteristiken wie folgt zu:
1.) Jede Antenne weist eine azimutale Strahlungsverteilung auf, die bidirektional ausgeprägt ist (z.B. horizontaler lambda/2-Dipol).
   In diesem Beispiel reihen sich die Funkzellen entlang des Verkehrsweges aneinander und überlappen derart, daß sich innerhalb jeder Funkzelle die sie versorgende Antenne und beide dazu benachbarten Antennen befinden. Das Weiterreichen erfolgt so, daß eine Mobilstation sich stets auf die Funkfeststation zubewegt, mit der sie in Funkverbindung steht.
2.) Jede Antenne weist eine einseitig ausgeprägte, azimutale Strahlungsverteilung auf (z.B. Reflektorantenne).
   Die Antennen können sich erfindungsgemäß mit folgenden Orientierungsrichungen entlang des Verkehrsweges aneinanderreihen:
   a) Sind die Funkzellen jeweils mittels der entsprechenden Antenne in die Bewegungsrichtung einer Mobilstation orientiert, so bewirkt das Weiterreichen, daß sich die Mobilstation stets von der Funkfeststation entfernt, mit der sie in Funkverbindung steht (aktuelle Funkfeststation).
   b) Sind die Funkzellen Jeweils mittels der entsprechenden Antenne gegen die Bewegungsrichtung einer Mobilstation orientiert, so bewirkt das Weiterreichen, daß sich die Mobilstation stets der aktuellen Funkfeststation nähert.

In allen obigen Fällen ist eine Funkverbindung zwischen einer Funkfeststation und einer an letzterer vorbeifahrenden Mobilstation demnach ausgeschlossen, d.h. es kann kein Dopplersprung eintreten.

Durch das weite Überlappen der Funkzellen kann das Weiterreichen einer Funkverbindung, während des Aufenthaltes der entsprechenden Mobilstation im Überlappungsbereich von jeweils zwei benachbarten Funkzellen, derart erfolgen, daß ein Mindestabstand zwischen der Mobilstation und der aktuellen Funkfeststation eingehalten wird. Dadurch wird erzielt, daß die Einfallsrichtung der Funkverbindung weitgehend der Orientierungsrichtung der jeweiligen Funkzelle entspricht und somit insbesondere beim Funkzellen-Wechsel keine abrupte Änderung einer Dopplerverschiebung auftritt.

Gemäß Anspruch 4 wird eine Funkfeststation bereitgestellt, die in dem oben beschriebenen zellularen Mobilfunksystem wie folgt einsetzbar ist:

Die Funkfeststation weist mindestens eine Antenne mit einer einseitig ausgeprägten Richtcharakteristik auf, mittels derer jeweils eine einzelne Funkzelle versorgt wird. Somit kann mittels N Funkfeststationen mindestens eine Kette,
bestehend aus N Funkzellen,
in eine Verlaufsrichtung des Verkehrsweges aufgebaut werden.

Vorteilhafte Weiterbildungen der Erfindung sind den Unteransprüchen zu entnehmen.

Nach Anspruch 2 wird das Weiterreichen der Funkverbindung so bewirkt, daß die Mobilstation stets in Funkverbindung mit der Funkfeststation steht, an der die Mobilstation zuletzt vorbeigefahren ist.

Somit entfernt sich die Mobilstation stets von der aktuellen Funkfeststation und bewegt sich innerhalb der aktuellen Funkzelle in Richtung einer abnehmenden Funkfeldstärke. Bei einem Funkzellen-Wechsel erfolgt ein Weiterreichen der Funkverbindung aus einem Bereich mit kleiner Funkfeldstärke (Endbereich der noch aktuellen Funkzelle) in einen Bereich mit großer Funkfeldstärke (Anfangsbereich der nachfolgenden Funkzelle), wodurch der Aufbau der neuen Funkverbindung erleichtert wird (z.B. qualitativ gute Synchronisationssignale).

Nach Anspruch 3 wird ein zellulares Mobilfunksystem für den Bahnstreckenfunk bereitgestellt, welches nach dem TDMA-Zeitmultiplexverfahren (TDMA: Time Division Multiple Access) arbeitet. Dabei werden zur Funkverbindung zwischen den Mobilstationen und den Feststationen mehrere Zeitkanäle (Zeitschlitze) pro Funkfeststation zur Verfügung gestellt. Die Frequenzbandbreite der Funkverbindung ist zeitweise Jedem Teilnehmer (Mobilstation) voll zugeteilt. Das zellulare Mobilfunksystem ist vorteilhaft zur Versorgung einer Bahnstrecke geeignet, da der wachsende Einsatz von Höchstgeschwindigkeitszügen technische Lösungen für möglichst Dopplersprung-freie Funkverbindungen fordert.

Arbeitet obiges zellulares Mobilfunksystem nach einem standardisierten TDMA-Zeitmultiplexverfahren wie z.B. GSM (Global System for Mobile Communications), so ist das zellulare Mobilfunksystem vorteilhaft in ein weitreichendes Bahnstreckenfunk-Netz integrierbar, wie z.B. innerhalb des DIBMOF-Konzeptes der Deutschen Bahnen (DIBMOF: Dienstingetrierender Bahnmobilfunk).

Ein Bahnstreckenfunk gemäß DIBMOF-Konzept soll in den Frequenzbereichen 870-874 MHz und 915-919 MHz nach dem GSM-Standard spezifiziert werden.

Nach Anspruch 5 ist die Funkfeststation derart weitergebildet, daß mittels zweier Autennen zwei gegensinnig orientierte Funkzellen versorgt werden.

So können mittels N Funkfeststationen zwei Ketten, jeweils bestehend aus N Funkzellen, entlang des Verkehrsweges aufgebaut werden und letzteren bidirektional im Sinne von Anspruch 2 versorgen, d.h. Fahrtrichtung der Mobilstation und Richtung des Weiterreichens sind jeweils gleichsinnig. Dabei ist jedoch eine Sende- und Empfangseinheit pro Funkzelle erforderlich, d.h. bei gleichzeitigem Betrieb beider Ketten muß jede Funkfeststation zwei Sende- und Empfangseinheiten enthalten.

Wird der Verkehrsweg nur wechselweise in jeweils einer seiner Verlaufsrichtungen benutzt, so genügt die Ausrüstung der Funkfeststation mit nur einer Sende- und Empfangseinheit, die sich entsprechend obiger Benutzung wechselweise auf eine der beiden Antennen aufschaltet. So kann je nach Fahrtrichtung der sich aktuell auf dem Verkehrsweg befindenden Mobilstation eine Kette von Funkzellen zur unidirektionalen Versorgung des Verkehrsweges aufgebaut werden.

Im folgenden wird die Erfindung anhand zweier Ausführungsbeispiele unter Zuhilfenahme der beiliegenden Zeichnungen weiter erläutert.
- Fig. 1: zeigt ein zellulares Mobilfunksystem mit einer Funkzellen-Kette für eine unidirektionale Versorgung einer Bahnstrecke,
- Fig. 2: zeigt ein zellulares Mobilfunksystem mit zwei Funkzellen-Ketten für eine bidirektionale Versorgung einer Bahnstrecke.

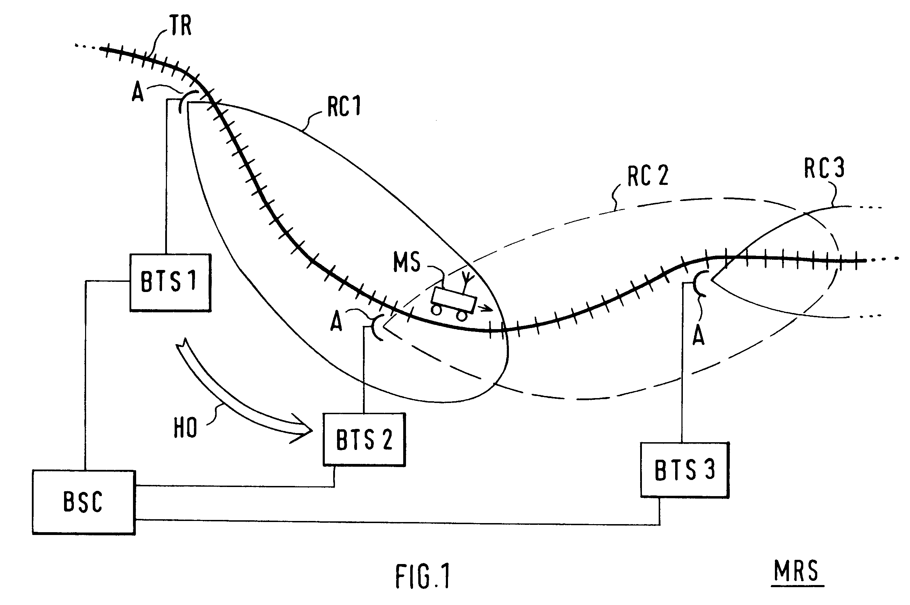

Nach Fig. 1 ist vereinfachend für eine Fahrtrichtung ein zellulares Mobilfunksystem MRS dargestellt, das mindestens drei Funkfeststationen BTS1, BTS2, BTS3 ... enthält, die mit einer Steuereinrichtung BSC verbunden sind. Die Funkfeststationen sind längs einer Bahnstrecke TR in Abständen von etwa 2 - 5 km so angeordnet, daß sie vorzugsweise in starken Krümmungsbereichen der Bahnstrecke positioniert sind.

Jede Funkfeststation weist eine Antenne A mit Richtcharakteristik auf. Die Antennen sind gleichsinnig in Fahrtrichtung einer sich auf der Bahnstrecke bewegenden Mobilstation MS orientiert.

Mittels der Antennen wird von den Funkfeststationen jeweils eine Funkzelle RC1, RC2, RC3 ... versorgt, welche sich von der entsprechenden Antenne aus in Fahrtrichtung der Mobilstation erstreckt und nach Art einer Antennenkeule ausgebildet ist. Die Funkzellen überlappen die jeweils in Fahrtrichtung nächstliegende Funkzelle so weit, daß sich im Überlappungsbereich mindestens ein etwa 0,5 km langer Streckenabschnitt der Bahnstrecke befindet. Somit ist längs der Rahnstrecke eine Kette von sich überlappenden, in Fahrtrichtung orientierten Funkzellen ausgebildet. Befindet sich die Mobilstation jeweils in einem Überlappungsbereich zweier Funkzellen, so steuert die Steuereinrichtung jeweils ein Weiterreichen HO der Funkverbindung in Fahrtrichtung der Mobilstation.

Das Weiterreichen HO erfolgt, aufgrund der hier dargestellten Systemkonfiguration, gleichartig wie das Weiterreichen im bereits erwähnten GSM-System. Demnach wird die Funkverbindung von einem Funkbereich mit einer geringen Funkfeldstärke in einen Funkbereich mit einer größeren Funkfeldstärke weitergereicht, d.h. beim Weiterreichen überbrückt die noch bestehende Funkverbindung eine längere Distanz als die neue Funkverbindung.

Die in Fig. 1 dargestellte Steuereinrichtung BSC kann vorteilhaft nach einem Verfahren zum Weiterreichen (Handover-Procedure) arbeiten, das im oben erwähnten GSM-System eingesetzt wird.

Die Mobilstation entfernt sich stets von der Funkfeststation, mit der sie in Funkverbindung steht und letztere bleibt von einem Dopplersprung unbeeinflußt.

Alternativ zu der in Fig. 1 dargestellten Lösung ist ein abgewandeltes Verfahren zum Weiterreichen denkbar, bei dem die Mobilstation sich stets auf die Funkfeststation zubewegt, mit der sie in Funkverbindung steht.

Zur Optimierung des Weiterreichens einer Funkverbindung bietet der Überlappungsbereich die Wahlmöglichkeit des Ortes und damit des Zeitpunktes des Weiterreichens anhand von Entscheidungskriterien, wie z.B. momentane Übertragungsqualität und momentane Einfallrichtung der Funkverbindung.

Das Weiterreichen erfolgt möglichst günstig, falls sich die Bewegungslinie der Mobilstation mit den Ausrichtungsachsen beider am Weiterreichen beteiligten Antennen deckt. Fährt die Mobilstation mit einer konstanten Geschwindigkeit, so tritt im obigen Fall eine konstante Dopplerverschiebung in der Empfangsfrequenzen der entsprechenden alten und neuen Funkverbindungen auf.

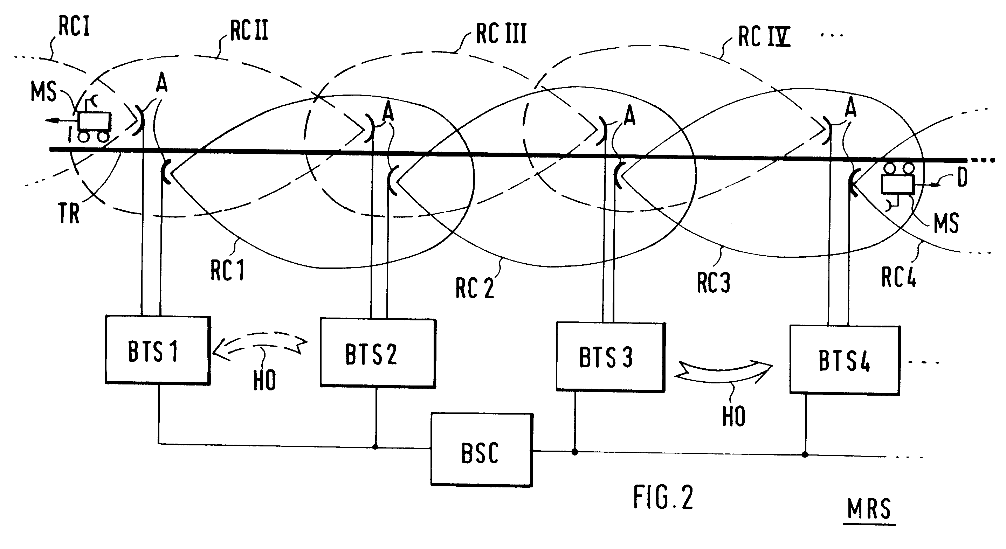

Fig. 2 zeigt ein zellulares Mobilfunksystem MRS für Bahnmobilfunk mit mindestens vier Funkfeststationen BTS1, BTS2, BTS3, BTS4 ..., die jeweils zwei Antennen A mit Richtcharakteristik aufweisen, die gegensinnig richtungsorientiert sind und mittels derer jeweils eine Funkzelle RC1, RCI; RC2, RCII; RC3, RCIII, RC4, RCIV; ...; versorgt wird.

Die Funkfeststationen sind längs einer Bahnstrecke TR in Abständen von etwa 4 km so angeordnet, daß jeweils mittels ihrer Antennen die entsprechenden Funkzellen gegensinnig und längs der Bahnstrecke ausgerichtet sind.

Die mindestens vier Funkfeststationen bilden zwei gegensinnig orientierte Ketten von sich überlappend aneinanderreihenden Funkzellen (Antennenkeulen). Eine Kette ist in eine Verlaufsrichtung D des Verkehrsweges orientiert. Die andere Kette ist in dazu entgegengesetzter Richtung orientiert.

Eine mit den Funkfeststationen verbundene Steuereinrichtung BSC steuert ein Weiterreichen HO einer Funkverbindung innerhalb der jeweiligen Kette von Funkzellen . Das Weiterreichen geschieht entsprechend dem anhand der Fig. 1 beschriebenen Prinzip, d.h. die sich längs der Bahnstrecke bewegenden Mobilstationen entfernen sich jeweils von der Funkfeststation, mit der sie in Funkverbindung stehen (aktuelle Funkfeststation).

## Patentansprüche

1. Zellulares Mobilfunksystem (MRS) mit folgenden zusammenwirkenden Systemkomponenten:
(1) Funkfeststationen (BTSx), die entlang eines Verkehrsweges (TR) angeordnet sind;
(2) Funkzellen (RCx), die jeweils von einer der Funkfeststationen mittels einer Antenne (A) mit Richtcharakteristik so versorgt werden, daß die Funkzellen sich überlappend entlang des Verkehrsweges aneinanderreihen und jede Funkzelle mindestens eine Antenne einer benachbarten Funkzelle umhüllt;
(3) mindestens eine Steuereinrichtung (BSC), die mit den Funkfeststationen verbunden ist und die ein Weiterreichen (HO) einer Funkverbindung zwischen einer sich auf dem Verkehrsweg bewegenden Mobilstation (MS) und einer der Funkfeststationen derart steuert, daß die Funkverbindung jeweils zwischen der Mobilstation und derjenigen Funkfeststation besteht, in deren Funkzelle sich die Mobilstation zuletzt hinein bewegt hat.

2. Zellulares Mobilfunksystem nach Anspruch 1, dadurch gekennzeichnet, daß die Steuereinrichtung das Weiterreichen der Funkverbindung an diejenige Funkfeststation bewirkt, die von der Mobilstation zuletzt passiert wurde.

3. Zellulares Mobilfunksystem nach Anspruch 1, dadurch gekennzeichnet, daß
der Verkehrsweg eine Bahnstrecke ist und
die Funkverbindung im Zeitmultiplex mit Vielfachzugriff erfolgt.

4. Funkfeststation (BTSx) für das zellulare Mobilfunksystem nach Anspruch 1 mit mindestens einer Antenne (A) mit Richtcharakteristik, die einseitig gerichtet ausstrahlt und eine Funkzelle (RCx) versorgt.

5. Funkfeststation nach Anspruch 4,
dadurch gekennzeichnet, daß
zwei solcher Antennen vorgesehen sind, die entgegengesetzt zueinander ausgerichtet sind.
